# EUROPÄISCHE PATENTSCHRIFT

(11) **EP 1 564 469 B1**
(45) Veröffentlichungstag und Bekanntmachung des Hinweises auf die Patenterteilung: **25.07.2007**
(21) Anmeldenummer: 04405080.5
(22) Anmeldetag: 11.02.2004
(51) Int. Cl.: F16L 13/14

(54) **Fitting für eine Pressverbindung**
Fitting for a press joint
Raccord pour un raccordement serré

(43) Veröffentlichungstag der Anmeldung: 17.08.2005
(73) Patentinhaber: GEBERIT TECHNIK AG, 8645 Jona (CH)
(72) Erfinder: Wili, Hansruedi, 8645 Jona (CH); Heusser, Urs, 8625 Gossau (CH)
(74) Vertreter: Groner, Manfred

(56) Entgegenhaltungen:
- DE-A- 10 207 201
- DE-C- 10 137 078
- US-B1- 6 575 500

## Beschreibung

Die Erfindung betrifft einen Fitting für eine Pressverbindung nach dem Oberbegriff des Anspruchs 1.

Pressfittinge zur Herstellung von Pressverbindungen sind in zahlreichen Ausführungen bekannt geworden und haben sich insbesondere in der Sanitärtechnik an sich bewährt. Sie dienen jeweils zum Anschliessen eines Kunststoffrohres, Mehrschichtverbundrohres oder Metallrohres mit einem weiteren Rohr oder einer Armatur. Um das Rohr mit dem Fitting zu verbinden, wird das Rohr auf den Fitting aufgeschoben und im aufgeschobenen Bereich mit einem Presswerkzeug plastisch verpresst, wobei das Rohr direkt oder zusammen mit einer Presshülse verpresst wird. Ein solcher Fitting ist aus der US 6,575,500 bekannt geworden.

Dichtungsringe können einerseits zur Abdichtung des Rohres gegenüber dem Anschlussbereich des Fittings und andererseits zur vorläufigen achsialen Fixierung des aufgeschobenen aber noch nicht verpressten Rohres dienen. Zusätzlich kann gemäss der DE 29 70 7799 U unmittelbar von einem Bund des Fittings ein Verdrehsicherungsabschnitt mit mehreren achsial verlaufenden Rippen vorgesehen sein. Ein weiterer Fitting dieser Art ist aus der EP 0 513 292 bekannt geworden.

Um Bauschäden durch versehentlich nicht verpresste Anschlüsse zu vermeiden, ist es gemäss der WO 03/064912 des Anmelders bekannt, den Dichtungsabschnitt so auszubilden, dass vor dem Verpressen eine Leckage vorhanden ist. Ist eine solche nicht verpresste Anschlussstelle vorhanden und wird in der Leitung ein Druck aufgebaut, so kann diese nicht verpresste Anschlussstelle aufgrund des ausströmenden Wassers sofort erkannt werden. Damit eine Leckage vorhanden ist, ist der Dichtungsring hier so ausgebildet, dass sein Aussendurchmesser kleiner ist als der Innendurchmesser des anzuschliessenden Rohres. Beim aufgeschobenen aber nicht verpressten Rohr besteht somit ein Durchlass zwischen dem Dichtungsring und der Innenseite des Rohres. Durch Verpressen wird dieser Durchlass geschlossen.

Erfindungsgemäss wird ein Fitting gemäss Anspruch 1 vorgeschlagen zur vorläufigen axialen Fixierung des aufzupressenden Rohrendes. Mit einem solchen Haltering ist eine vorläufige achsiale Fixierung des Rohres möglich, ohne dass gleichzeitig eine Dichtwirkung erreicht wird. Die genannte Leckage ist beim erfindungsgemässen Fitting bzw. bei einer mit diesem hergestellten Verbindung auch dann vorhanden, wenn das Rohr auf den Anschlussbereich aufgesetzt und das Rohr nicht verpresst ist. Der erfindungsgemässe Fitting kann jedoch auch zur Herstellung einer Pressverbindung verwendet werden, bei welcher die genannte Leckage nicht vorgesehen ist.

Der erfindungsgemässe Fitting ist vorzugsweise ein Metallfitting, kann jedoch auch ein Kunststoff-Fitting sein. Der Haltering wird vorzugsweise separat hergestellt, beispielsweise als Spritzgussteil. Ein wesentlicher Vorteil des Halteringes besteht darin, dass grössere Toleranzen zwischen dem Fitting und dem Rohr möglich sind. Dadurch ergibt sich einerseits eine kostengünstige Herstellung und andererseits eine einfachere Montage. Die kostengünstige Herstellung ist insbesondere durch die möglichen höheren Toleranzen bedingt.

Nach einer Weiterbildung der Erfindung ist der Haltering ein Spreizring. Dies ermöglicht die separate Herstellung des Halteringes und eine einfache Montage des Halteringes bzw. des Spreizringes auf dem Fitting.

Nach einer Weiterbildung der Erfindung ist der Haltering in eine Nut der Aussenseite des Fittings eingesetzt. Dies ermöglicht eine geeignete Lagerung des Halteringes am Fitting.

Nach einer Weiterbildung der Erfindung ist vorgesehen, dass der Haltering zwischen einem Bund und dem genannten Dichtring angeordnet ist. Dadurch ist vermieden, dass eventuelle Verletzungen des Rohres an seiner Innenseite nicht zu einer Undichtigkeit führen können.

Nach einer Weiterbildung der Erfindung ist vorgesehen, dass der Haltering an seinem Umfang mehrere radial nach aussen vorstehende Haltenocken aufweist. Diese Haltenocken sind so ausgebildet, dass sie beim Aufschieben des Rohres auf den Anschlussbereich sich in die Innenseite des Rohres eingraben und dadurch dieses achsial fixieren. Diese Fixierung ist dann besonders funktionssicher erreichbar, wenn gemäss einer Weiterbildung der Erfindung der Haltering wenigstens einen radial federnden Abschnitt aufweist. Beim Aufschieben des Rohres auf den Anschlussbereich können die Haltenocken radial nach innen ausweichen und dadurch können Verletzungen an der Innenseite des Rohres weitgehend vermieden werden.

Nach einer Weiterbildung der Erfindung ist vorgesehen, dass der radial federnde Abschnitt durch eine Ausnehmung gebildet ist, welcher unterhalb eines Haltenockens angeordnet ist. Diese Ausnehmung ermöglicht einerseits die federnde Ausbildung des Halteringes und bildet andererseits einen Durchgang für das Wasser und bildet damit eine Leckage.

Nach einer Weiterbildung der Erfindung ist der Fitting ein Kunststoff-Fitting und der Haltering aus Kunststoff direkt angespritzt.

Ein Ausführungsbeispiel der Erfindung wird nachfolgend anhand der Zeichnung näher erläutert. Es zeigen:
- Figur 1: ein Teillängsschnitt durch einen erfindungsgemässen Fitting mit einem aufgeschobenem Abschnitt eines Rohres sowie ein schematisch dargestellter Abschnitt eines Presswerkzeuges und
- Figur 2: ein Querschnitt entlang der Linie II-II der Figur 1.

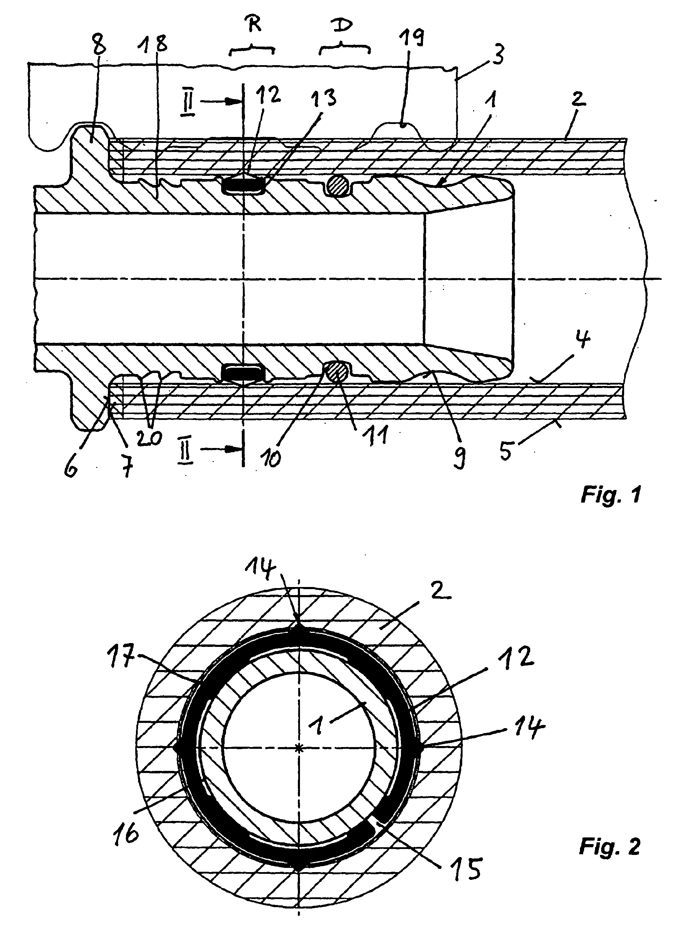

Der in Figur 1 gezeigte rohrförmige Fitting 1 weist einen rohrförmigen Anschlussbereich 18 auf, auf den ein Rohr 2 bis zu einer Anschlagfläche 7 eines Bundes 8 aufschiebbar ist. Im aufgeschobenen Zustand liegt eine Stirnfläche 6 des Rohres 2 an der genannten Anschlagfläche 7 an. Auf der gegenüberliegenden Seite des Bundes 8 kann der in Figur 1 abgeschnittene Teil gleich bzw. spiegelbildlich ausgebildet sein wie der gezeigte Anschlussbereich 19. Der abgeschnittene Teil kann aber auch anders ausgebildet sein, beispielsweise kann er ein Gewinde oder eine Rastvorrichtung zum Anschliessen einer Armatur aufweisen. Der Fitting 1 ist insbesondere ein Metallfitting, er kann jedoch auch ein Kunststoff-Fitting sein.

Eine Aussenseite 9 des Anschlussbereiches 8 weist eine umlaufende Nut 10 auf, in welche ein Dichtungsring 11 aus gummielastischem Kunststoff eingelegt ist. Der Dichtungsring 11 ist so ausgebildet, dass er bei aufgeschobenem Rohr 2 nicht verpresst ist und somit nicht dichtet.

Im Abstand zur Nut 10 ist eine weitere Nut 13 in der Aussenseite 9 angeordnet, die ebenfalls umlaufend ist und in der ein Haltering 12 gelagert ist. Die Nut 13 ist wie ersichtlich breiter als die Nut 10 und zwischen dieser Nut und dem Bund 8 angeordnet. Die Nut 13 mit dem Haltering 12 bildet einen Rückhalteabschnitt R, in welchem das aufgeschobene Rohr 2 vorläufig achsial fixiert. Die Nut 10 mit dem Dichtungsring 11 bildet hingegen einen Dichtungsabschnitt D, in welchem das Rohr 2 gegenüber dem Anschlussbereich 18 wasserdicht abgedichtet wird. Die Bereiche R und D sind wie ersichtlich im Abstand zueinander angeordnet.

Der Haltering 12 ist gemäss Figur 2 offen und besitzt einen radialen Schlitz 15. Der Haltering 12 kann beim Montieren aufgeweitet und wie ein Sprengring in die Nut 13 eingelegt werden. An seinem Umfang besitzt der Haltering 12 vorzugsweise mehrere, beispielsweise vier Haltenocken 14, die angeformt sind und radial nach aussen ragen. Unter jedem Haltenocken 14 ist eine sich in Umfangsrichtung erstreckende Ausnehmung 16 angeordnet, welche jeweils eine radiale federnde Auslenkung des entsprechenden Haltenockens 14 nach innen ermöglicht. Der Schlitz 15 als auch die Ausnehmung 16 bilden zudem Leckagestellen, die verhindern, dass im Rückhalteabschnitt R das Rohr 2 gegenüber dem Anschlussbereich 18 vor dem Verpressen abgedichtet ist. Ebenfalls werden in der Regel schmale Durchgänge bzw. Zwischenräume 17 zwischen der Aussenseite des Halteringes 12 und der Innenseite 4 des Rohres 2 gebildet. Beim aufgeschobenen Rohr graben sich die Haltenocken 14 in die Innenseite 4 des Rohres 2 und sorgen damit für eine Fixierung des Rohres 2 am Fitting 1. Die Nocken 14 können auch durch andere geeignete Verankerungsmittel ersetzt sein. Denkbar wäre beispielsweise hier auch eine umlaufende scharfkantige Rippe, welche sich in die Innenseite 4 eingräbt.

Der Haltering 12 ist vorzugsweise aus Kunststoff hergestellt, insbesondere als Spritzgussformteil. Der Werkstoff des Halteringes 12 ist vergleichsweise hart, zumindest wesentlich härter als der Werkstoff des Dichtungsringes 11. Der Fitting 1 ist wie erläutert vorzugsweise aus Metall, kann aber auch beispielsweise aus PVDF hergestellt sein.

Zum Verpressen des aufgeschobenen Rohres 2 wird ein an sich bekanntes Presswerkzeug 3, beispielsweise eine Presszange verwendet. In Figur 1 ist lediglich ein Abschnitt einer Pressbacke gezeigt. Die beiden Pressbacken des Presswerkzeuges 3 weisen jeweils eine innere Kontur 19 auf, welche das Rohr 2 auf seiner Aussenseite korrespondierend plastisch verformt. Insbesondere wird das Rohr 2 im Dichtungsabschnitt D so verformt, dass der Dichtungsring 11 zusammengepresst wird und schliesslich dichtet. Ebenfalls findet eine starke Verformung im Bereich von umlaufenden Rippen 20 statt, durch welche das verpresste Rohr 2 achsial fixiert wird. Nach dem Verpressen ist das Rohr 2 dicht und im Wesentlichen unlösbar mit dem Fitting 1 verbunden.

### Bezugszeichenliste

- 1.: Fitting
- 2.: Rohr
- 3.: Presszange
- 4.: Innenseite
- 5.: Aussenseite
- 6.: Stirnfläche
- 7.: Anschlagfläche
- 8.: Bund
- 9.: Aussenseite
- 10.: Nut
- 11.: Dichtungsmittel
- 12.: Haltering
- 13.: Nut
- 14.: Haltenocken
- 15.: Schlitz
- 16.: Ausnehmung
- 17.: Zwischenraum
- 18.: Anschlussbereich
- 19.: Kontur
- 20.: Rippen
- D: Dichtungsabschnitt
- R: Rückhalteabschnitt

## Patentansprüche

1. Fitting für eine Pressverbindung, mit wenigstens einem rohrförmigen Anschlussbereich (18), auf den ein anzuschliessendes Rohr (2) aufschiebbar und zur Herstellung einer Verbindung auf diesen aufpressbar ist, wobei der Anschlussbereich (18) auf seiner Aussenseite (9) wenigstens einen Dichtungsabschnitt (D) mit einem gummielastischen Dichtring (11) zum Abdichten des aufgepressten Rohrendes gegenüber dem Anschlussbereich (18) aufweist, **dadurch gekennzeichnet, dass** am Umfang des rohrförmigen Anschlussbereichs (18) im Abstand zum Dichtungsabschnitt (D) ein Rückhalteabschnitt (R) mit einem Haltering (12) zur vorläufigen achsialen Fixierung des aufzupressenden Rohrendes angeordnet ist.

2. Fitting nach Anspruch 1, **dadurch gekennzeichnet, dass** der Haltering (12) als Spreizring ausgebildet ist.

3. Fitting nach Anspruch 1 oder 2, **dadurch gekennzeichnet, dass** der Haltering (12) in einer Nut (13) gelagert ist.

4. Fitting nach einem der Ansprüche 1 bis 3, **dadurch gekennzeichnet, dass** der Haltering (12) zwischen einem Bund (8) und dem genannten Dichtring (11) angeordnet ist.

5. Fitting nach einem der Ansprüche 1 bis 4, **dadurch gekennzeichnet, dass** der genannte Dichtring (11) einen Aussendurchmesser aufweist, der gleich oder kleiner ist als der grösste Aussendurchmesser des Anschlussbereiches (18) bzw. des Innendurchmessers des Rohres (2).

6. Fitting nach einem der Ansprüche 1 bis 5, **dadurch gekennzeichnet, dass** der Haltering (12) an seinem Umfang mehrere radial nach aussen vorstehende Haltenocken (14) aufweist.

7. Fitting nach einem der Ansprüche 1 bis 6, **dadurch gekennzeichnet, dass** der Haltering (12) wenigstens einen radial federnden Abschnitt aufweist.

8. Fitting nach Anspruch 7, **dadurch gekennzeichnet, dass** der radial federnde Abschnitt durch eine Ausnehmung (16) gebildet ist, wobei diese unterhalb eines Haltenockens (14) angeordnet ist.

9. Fitting nach einem der Ansprüche 1 bis 8, **dadurch gekennzeichnet, dass** der Haltering (12) in Einschubrichtung des Rohres (2) gesehen hinter dem genannten Dichtring (11) angeordnet ist.

10. Fitting nach einem der Ansprüche 1 bis 9, **dadurch gekennzeichnet, dass** er ein Kunststoff-Fitting ist und dass der Haltering (12) direkt angespritzt ist.

11. Fitting nach einem der Ansprüche 1 bis 10, **dadurch gekennzeichnet, dass** der Haltering (12) aus einem Kunststoff hergestellt ist, dessen Härte wesentlich höher ist als diejenige des genannten Dichtringes (11).

## Claims

1. Fitting for a press-fit connection, having at least one tubular attachment region (18) onto which a tube (2) to be attached may be pushed and, for making a connection, may be pressed, in which the attachment region (18) has on its outside (9) at least one sealing portion (D) having a rubber-elastic sealing ring (11) for sealing the pressed-on tube end in relation to the attachment region (18), **characterized in that** a retaining portion (R) having a holding ring (12) for temporarily axially fixing the tube end to be pressed on is arranged on the periphery of the tubular attachment region (18), at a spacing from the sealing portion (D).

2. Fitting according to Claim 1, **characterized in that** the holding ring (12) takes the form of a widenable ring.

3. Fitting according to Claim 1 or 2, **characterized in that** the holding ring (12) is housed in a groove (13).

4. Fitting according to one of Claims 1 to 3, **characterized in that** the holding ring (12) is arranged between a collar (8) and the said sealing ring (11).

5. Fitting according to one of Claims 1 to 4, **characterized in that** the said sealing ring (11) has an external diameter which is less than or equal to the maximum external diameter of the attachment region (18) or the internal diameter of the tube (2).

6. Fitting according to one of Claims 1 to 5, **characterized in that** the holding ring (12) has a plurality of radially outwardly projecting holding bumps (14) on its periphery.

7. Fitting according to one of Claims 1 to 6, **characterized in that** the holding ring (12) has at least one radially resilient portion.

8. Fitting according to Claim 7, **characterized in that** the radially resilient portion is formed by a recess (16), the latter being arranged underneath a holding bump (14).

9. Fitting according to one of Claims 1 to 8, **characterized in that** the holding ring (12) is arranged downstream of the said sealing ring (11), as seen in the direction in which the tube (2) is pushed in.

10. Fitting according to one of Claims 1 to 9, **characterized in that** it is a synthetic fitting, and **in that** the holding ring (12) is injection moulded directly onto it.

11. Fitting according to one of Claims 1 to 10, **characterized in that** the holding ring (12) is made from a synthetic material whereof the hardness is substantially greater than that of the said sealing ring (11).

## Revendications

1. Raccord pour un raccordement serré, comprenant au moins une région de raccordement (18) de forme tubulaire, sur laquelle peut être enfoncé un tube (2) à raccorder qui peut être pressé sur celle-ci pour créer un raccordement, la région de raccordement (18) présentant sur son côté extérieur (9) au moins une portion d'étanchéité (D) avec une bague d'étanchéité (11) en plastique élastomère pour réaliser l'étanchéité de l'extrémité tubulaire pressée par rapport à la région de raccordement (18), **caractérisé en ce qu'**à la périphérie de la région de raccordement (18) de forme tubulaire à distance de la portion d'étanchéité (D) est disposée une portion de retenue (R) avec une bague de retenue (12) pour la fixation axiale temporaire de l'extrémité de tube à presser.

2. Raccord selon la revendication 1, **caractérisé en ce que** la bague de retenue (12) est réalisée sous forme de bague d'écartement.

3. Raccord selon la revendication 1 ou 2, **caractérisé en ce que** la bague de retenue (12) est montée dans une rainure (13).

4. Raccord selon l'une quelconque des revendications 1 à 3, **caractérisé en ce que** la bague de retenue (12) est disposée entre un bourrelet (8) et ladite bague d'étanchéité (11).

5. Raccord selon l'une quelconque des revendications 1 à 4, **caractérisé en ce que** ladite bague d'étanchéité (11) présente un diamètre extérieur qui est inférieur ou égal au plus grand diamètre extérieur de la région de raccordement (18) ou au diamètre intérieur du tube (2).

6. Raccord selon l'une quelconque des revendications 1 à 5, **caractérisé en ce que** la bague de retenue (12) présente sur sa périphérie plusieurs cames de retenue (14) saillant radialement vers l'extérieur.

7. Raccord selon l'une quelconque des revendications 1 à 6, **caractérisé en ce que** la bague de retenue (12) présente au moins une portion radialement élastique.

8. Raccord selon la revendication 7, **caractérisé en ce que** la portion radialement élastique est formée par un évidement (16) qui est disposé sous une came de retenue (14).

9. Raccord selon l'une quelconque des revendications 1 à 8, **caractérisé en ce que** la bague de retenue (12) est disposée derrière ladite bague d'étanchéité (11), vu dans la direction d'enfoncement du tube (2).

10. Raccord selon l'une quelconque des revendications 1 à 9, **caractérisé en ce qu'**il s'agit d'un raccord en plastique et **en ce que** la bague de retenue (12) est directement moulée dessus.

11. Raccord selon l'une quelconque des revendications 1 à 10, **caractérisé en ce que** la bague de retenue (12) est fabriquée en un plastique dont la dureté est essentiellement plus élevée que celle de ladite bague d'étanchéité (11).
